Europäisches Patentamt

(19) European Patent Office

Office européen des brevets

(11) Publication number : **0 469 846 A2**

## (12) EUROPEAN PATENT APPLICATION

(21) Application number : **91306959.7**

(22) Date of filing : **30.07.91**

(51) Int. Cl.⁵ : **C08K 7/02,** C08K 3/12, C08L 61/10

(30) Priority : **30.07.90 GB 9016669**

(43) Date of publication of application :
**05.02.92 Bulletin 92/06**

(84) Designated Contracting States :
**AT BE CH DE DK ES FR GB GR IT LI LU NL SE**

(71) Applicant : **FIRESTORE LIMITED**
**Lee Mills, Scholes**
**Holmfirth, Huddersfield HD7 1SS (GB)**

(72) Inventor : **O'Brien, Graham Patrick**
**The Royds, 8 Springwood Road**
**Thongsbridge, Huddersfield HD7 2SJ (GB)**
Inventor : **Schofield, Clive Martin**
**30 Town End Road**
**Holmfirth, Huddersfield HD7 1AH (GB)**

(74) Representative : **Jump, Timothy John Simon et al**
**VENNER, SHIPLEY & CO. 368 City Road**
**London EC1V 2QA (GB)**

(54) **Non-combustible articles of phenolic resins.**

(57) A non-combustible article, such as a fire containment sleeve, which is capable of withstanding exposure to 1000°C for at least 1 hour, is described as being formed from a phenolic resin of a resol type.

EP 0 469 846 A2

The present invention relates to non-combustible articles, to processes for manufacturing such articles and to the use of certain phenolic resins in the manufacture of non-combustible articles. In particular, the present invention relates to non-combustible articles for use in the fabric of buildings and other structures, where fire containment and resistence is of importance.

Building construction codes and regulations in force in many districts require new, or renovated buildings and other structures to have certain specified fire resistant properties. For example, some regulations require domestic dwellings to be constructed in such a way that, if a fire should start in a room within the dwelling, that fire should be contained in the room for a minimum of $\frac{1}{2}$ hour. Other regulations, such as those governing the construction and use of sea going vessels, impose stricter and more rigorous standards.

In order to meet prevailing standard and regulations concerning the containment of fire, fire resistant or non-combustible components are included in articles such as internal partition walls, bulkheads, doors etc.. For example, partition walls in domestic dwelling places may be required, as a minimum, to be formed from a double thickness of conventional plaster boarding and it is well established to incorporate a layer non-combustible material into a moulded door structure. Disadvantageously, most of the fire resistant materials used hitherto, such as plaster boarding and plaster like materials, are both heavy and bulky when employed in the quantities required in order to provide an adequate barrier to the spread of fire.

One known way in which flame, smoke or hot gases can spread out from a room or cavity within a building, is via passages formed through the otherwise non-combustible walls, floors or ceilings that define the room or cavity. These passages or ducts include those occupied by electrical, plumbing and other service conduits, such as ventilation and heating ducts. The problem is particularly acute where an occupying conduit is smaller than its passage and there is a resulting gap between the wall and conduit. There are often many such passages formed through the walls of industrial installations and commercial premises and into rooms occupied by heating plant or the like. These passages may accommodate conduits for flamable substances, including fuel, oil and gas.

The spread of flame, hot smoke and gases in the aforementioned manner may be prevented, or at least resisted, by the installation of fire containment sleeves around the entrances to vulnerable passages. A typical fire containment sleeve comprises a steel tube, the inner surface of which is lined with an intumescent material which expands on exposure to the high temperatures prevailing in a fire. The tube may be provided with a radially outwardly extending annular mounting flange, adjacent to one of its open ends and, generally, is installed with said flange held flat against the surface of a wall, with the passage to be protected in register with the bore of the tube. Where the passage is occupied by a conduit or pipe, the steel tube surround the conduit pipe and provides a sleeve therefor. In a fire, the intumescent material will expand and seal any gap between the conduit and the wall. If the conduit should perish in the heat of the fire, or the passage be unoccupied, when caused to expand by the heat of a fire, the intumescent material will plug the passage in its entirety, around the remains of any perished conduit. Obviously, fire containment sleeves must be non-combustible, in order to perform their function and it is for this reason that, heretofore, it has been necessary to fabricate them from steel. Such fabrication, by necessity, involves the manufacture of several discrete components which are subsequently assembled into completed products. Accordingly, the manufacture of fire containment sleeves is somewhat laborious and costly. A further problem with existing fire containment sleeves is that their steel construction renders them susceptible to corrosion, especially when installed in damp or otherwise hostile environments. This difficulty, heretofore, has been overcome by galvanizing then painting the steel sleeves. However, not only do these processes add to manufacturing costs, but also periodic inspection and repainting of installed sleeves is necessary if corrosion is to be prevented.

It is an object of the present invention to provide non-combustible articles which are light, non-bulky, easily and inexpensively manufactured, inherently corrosion resistant and substantially maintenance free. A further object of the present invention is to provide fire containment sleeves that may be easily and inexpensively manufactured.

In this specification, the term "non-combustible" is used to define articles and materials that are capable of withstanding the effects of heat and fire, without losing their integrity by suffering structural failure, perforation or the like, under the conditions set out in British Standard No. 476 part 20 (1987) at a temperature of 1000°C or more for at least 1 hour. Such a non-combustible article would be classified as being formed from a non-combustible material under British Standard 476 part 4 (1970).

According to a first aspect of the present invention there is provided a non-combustible article capable of withstanding exposure to 1000°C for at least 1 hour, characterised by comprising a thermoset phenolic resin of a resol type. Preferably the resin is formed from a product of a phenol condensed with formaldehyde, paraformaldehyde, or an aliphatic or aromatic aldehyde or ketone. Suitable phenols include phenol, cresol, napthol and xylenol and suitable aliphatic aldehydes and ketones include acetaldehyde and acetone. More preferably, phenol is condensed with formaldehyde or paraformaldehyde in a ratio of 1 mol of phenol to 1-3 mols of formaldehyde or paraformaldehyde.

In a preferred embodiment, the resin includes reinforcing fibers, such as glass, mineral or carbon fibers and, optionally, includes an inorganic filler, which is preferably aluminium hydride. Preferably, the condensation product is a thermosetting resin and the ratio of resin:fibers:filler is 33:33:33 (±5).

The most preferred thermosetting resin is phenolic resin REF. MS9172 and the preferred compositions are PHENMAT 41-0140 and DURESTOS PDMC 1130.

Phenolic resin REF. MS9172 is available under REF. MS9172 from Dynochem UK Ltd., of Duxford, Cambridge CB2 4QB. PHENMAT 41-0140, is a phenolic sheet moulding compound produced by DSM Resins UK Limited of P.O. Box 8, 5 Civic Way, Ellesmere Port, South Wirral, L65 ONB, England; and DURESTOS PDMC 1130 is a phenolic sheet moulding compound produced by TBA Industrial Products Ltd. of, P.O. Box 40, Rochdale DL12 7EQ, England.

An advantage of the first aspect of the present invention is that, when compared to conventional non-combustible articles, articles in accordance therewith are light, non-bulky easily manufactured by moulding, corrosion resistant and substantially maintenance free.

Articles in accordance with the present invention may take the form of flat sheets for use in providing fire resistant partitions. They may comprise door panels, complete moulded doors, window and door frames and many other components conventionally used in the fabric of buildings or other structures and wich are required to be fire resistant, or are for use in providing fire-resistance to buildings or other structures.

In a most preferred embodiment of the first aspect of the present invention the article is a shell for a fire containment sleeve, which sleeve comprises a shell at least partially filled with a heat activated expandable intumescent material. Preferably, the expandable intumescent material is in the form of a lining within the shell. The shell may comprise a plurality of components, which, most preferably, are formed by a hot pressure moulding process. The shell, preferably, is in the form of a hollow cylindrical sleeve, however, the sleeve may be formed with any cross-section which is appropriate for its intended use, for example, it may have a rectangular cross-section. Preferred intumescent materials include hydrated sodium silicate, urea formaldehyde resins and intumescent silicone resins. A hydrated sodium silicate is sold under the Trade Mark PALUSOL 100, available from B.A.S.F GmbH., Ludwigshafen, Federal Republic of Germany; INTUMEX L, available for Chemie Linz GmbH., of St. Peter Strasse, 25 POB 296A/4021, Linz, Austria. An intumescent urea formaldehyde resin composition is available from Dynochem UK Ltd., and described in British Patent No. 1538093 and;

an intumescent silicone resin is available under the Trade Mark FOMOX SI from Bayer AG.

Advantages of fire containment sleeves in accordance with the present invention are that they are lighter than the presently available steel bodied sleeves, are of similar bulk and are more easily and inexpensively manufactured by simple moulding processes. Moreover, the inventive fire containment sleeves are corrosion resistant and substantially maintenance free.

Although it is known that cured thermosetting phenolic resins can resist temperatures up to 400°C, it has hitherto been accepted that these resins will melt, burn or otherwise structurally fail at higher temperatures. During the course of the work which led up to the present invention, many different resins and resin compositions were experimented with. It was considered that for phenolic resins to be used in forming non-combustible articles, it would be necessary for fire resistant additives to be incorporated therein. It was with great surprise that it was found that the resins employed in the present invention could be used alone or in combination with the specified fillers and fibers.

In a second aspect, the present invention provides a method for manufacturing articles in accordance with the first aspect of the invention, including fire containment sleeves, which process comprises moulding a thermosetting phenolic resin or a composition including a thermosetting resin at an elevated temperature and pressure. Preferably, the thermoset resin so produced is a thermoset resin of the type which provides articles in accordance with the first aspect of the invention.

In a preferred embodiment, the moulding procedure is carried out in hot press compression moulding equipment, which preferably imposes a temperature of about 155°C±10°C and a pressure of between 0.5 and 10 tonnes/cm² on the resin or compositions, to fully cure the resin.

A further aspect of the present invention provides the use of a thermosetting phenolic resin of a resol type, or a composition including such a resin, in a method for producing an article in accordance with the first aspect of this invention, such as a fire containment sleeve. Advantageously, such use involves carrying out the process of the second aspect of this invention.

In a preferred embodiment of this further aspect of the invention, the thermosetting resin is formed by condensing a phenol with formaldehyde, paraformaldehyde, or an aliphatic or aromatic aldehyde; more preferably, phenol is condensed with formaldehyde or paraformaldehyde, in a ratio of 1 mol of phenol to 1-3 mols formaldehyde or paraformaldehyde, to provide the resin. In a more preferred embodiment, the thermosetting resin is in the form of a composition which includes reinforcing fibers and, optionally, an inorganic filler; preferably, the reinforcing fibers are glass, mineral or carbon fibers, the inorganic filler is aluminium hydride and the ratio of resin:fibers:filler is 33:33:33 (±5). The most preferred thermosetting resins and compositions are the same as those which provide the thermoset resins used in accordance with the first aspect of the invention.

A specific embodiment of the present invention will now be described, by way of example only and with reference to the following drawings:-

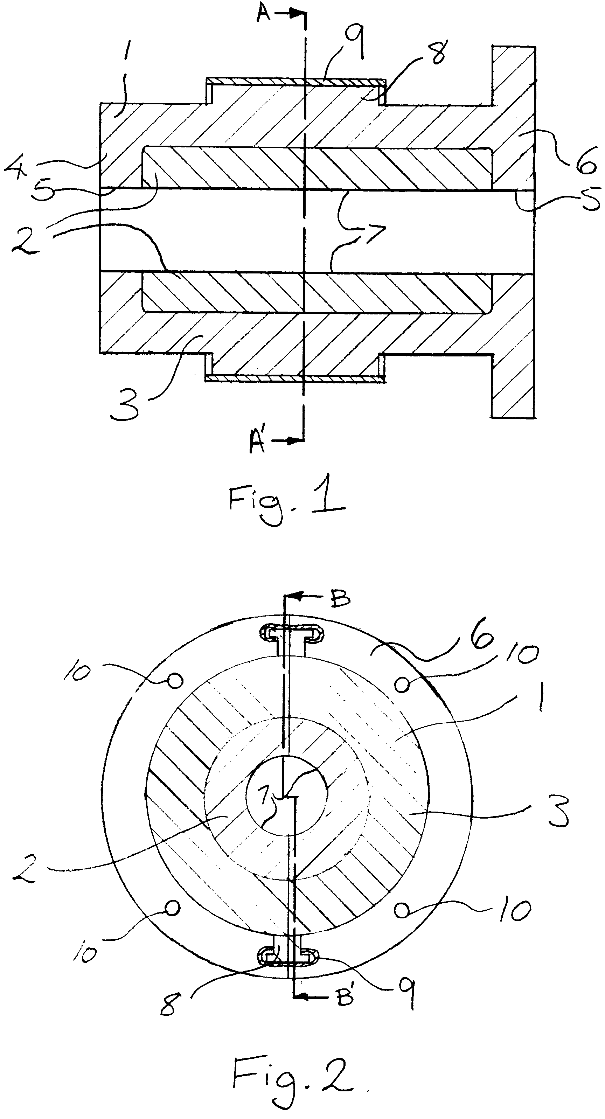

Figure 1 is an axial section (drawn on line B-B′ in Figure 2) through a fire containment sleeve in accordance with the present invention and; Figure 2 is a transaxial section through the fire containment sleeve illustrated in Figure 1 and drawn on the line A-A′ in Figure 1.

The illustrated fire containment sleeve comprises a two part shell or container portion 1 and a two part intumescent sleeve portion 2. Both parts of the shell or container portion 1 are formed from PHENMAT 41-0140 in hot press compression moulding equipment, at a temperature of 155°C and a pressure of 4.5 tonnes/cm$^2$.

When assembled, the two part shell 1 forms an outwardly substantially cylindrical sleeve 3 provided with a first annular flange 4, extending radially inwardly from a first open end part of the sleeve 3 and a second annular flange 6, extending both radially inwardly and outwardly from the other open end part of the sleeve 3. The inner margins 5 of the first and second annular flanges 4 and 6 are of substantially the same diameter.

The two part intumescent sleeve portion 2, when assembled, is dimensioned to be a snug fit in the shell, within the space between the sleeve 3 and first and second annular flanges 4 and 6. Thus, the outer diameter of the intumescent sleeve portion 2 is marginally less than the inner diameter of the sleeve 3 and the intumescent sleeve portion 2 has a marginally shorter axial dimension than the axial spacing between the first and second annular flanges 4 and 6. The radially inwardly facing cylindrical surface 7 of the intumescent sleeve portion 2 has substantially the same diameter as the radially inner margins 5 of the first and second annular flanges 4 and 6.

The two parts of the shell 1 are substantially inentical and the plane at which they meet, in the assembled shell 1, is substantially flat and extends axially along the shell 1. Likewise, the two parts of the intumescent sleeve portion 2 are substantially identical and abut one another at substantially the same plane as do the two parts of the shell 1.

Two L-section flanges 8 extend along the radially outer surface of each part of the sleeve 3 in an axial direction. The flanges 8 are located such that, when the two parts of the shell 1 are assembled (see Figure 2), the four L-sectioned flanges 8 cooperate to form two T-sectioned projections extending axially along the outer surface of the sleeve 3 and radially outwardly therefrom. A substantially C-section elongate clip 9 is engaged over each T-sectioned projection (formed from the cooperating L-sectioned flanges 8) to hold the assembled shell 1 and intumescent sleeve portion 2 together, as shown in the Figures. Four holes 10 are formed through the radially outer portion of the second annular flange 6.

In use, the fire containment sleeve is assembled about a cylindrical conduit, having a diameter less than the radially inner surface 7 of the intumescent sleeve portion 2, and the second annular flange 6 is fixed to a wall, through which the conduit passes, by screws or bolts extending through the holes 9 and fixed into the wall. On exposure to the heat of a fire, the material forming the intumescent sleeve portion 2 expands and grips the conduit. Preferably, the expanding intumescent material will exert sufficient pressure to crush a conduit, such as one formed from a plastic resin material, which may have been softened by the heat of the fire. The pressure exerted by the intumescent material may be upto 5bar. With further heating, the material expands into any gap around the conduit, where the latter passes through the wall. If the conduit should perish, the intumescent material will expand sufficiently to seal the passage through the wall.

Alternatively, the fire containment sleeve may be fixed to a wall in the aforementioned manner, with the inner surface of the intumescent sleeve portion 2 in register with an open passage through the wall. In the event of a fire, the material forming the intumescent sleeve portion 2 will expand and seal the passage, to prevent flames, smoke or hot gases passing through the wall via the passage.

A fire containment sleeve, assembled as shown in Figures 1 and 2, has been tested in accordance with the requirements of British Standard 476 part 20. The test procedure was carried out at a temperature of 1000°C and was discontinued after a period of 248 minutes, at which time no structural failure, or deformation of the sample has occurred.

## Claims

1. A non-combustible article capable of withstanding exposure to 1000°C for at least 1 hour, characterised by comprising a thermoset phenolic resin of a resol type.

2. A non-combustible article as claimed in claim 1, characterised in that the thermoset resin is formed from a product of a phenol condensed with formaldehyde, paraformaldehyde, or an aliphatic or aromatic aldehyde.

3. A non-combustible article as claimed in claim 2, characterised in that the thermoset resin is formed from a product of phenol condensed with formaldehyde or paraformaldehyde in a ratio 1 mol phenol to 1-3 mols formaldehyde or paraformaldehyde.

4. A non-combustible article as claimed in any of claims 1-3, characterised in that the thermoset resin includes reinforcing fibers and, optionally, an inorganic filler.

5. A non-combustible article as claimed in claim 4, characterised in that the condensation product is a thermosetting resin and the ratio of thermosetting resin:reinforcing fibers:inorganic filler is 33:33:33 (±5).

6. A non-combustible article as claimed in claim 5, characterised in that the reinforcing fibers are glass, mineral or carbon fibers and the inorganic filler is aluminium hydride.

7. A non-combustible article as claimed in any of claims 1-6, in the form of a shell for a fire containment sleeve.

8. A fire containment sleeve characterised by comprising a shell as claimed in claim 7, wherein the shell is at least partially filled with a heat activated expandable intumescent material.

9. A fire containment sleeve as claimed in claim 8, wherein the shell is in the form of a sleeve and is provided with means for facilitating its attachment to a wall or partition and the intumescent material comprises a lining inside said sleeve.

10. A fire containment sleeve, as claimed in claim 8 or claim 9, wherein the intumescent material is a hydrated sodium silicate, a urea formaldehyde resin, or an intumescent silicone resin.

11. A method of manufacturing an article as claimed in any of claims 1-10, comprising moulding a thermosetting phenolic resin of a resol type, or a composition including a thermosetting phenolic resin of a resol type at an elevated temperature and pressure.

12. A method as claimed in claim 11, wherein the thermosetting phenolic resin or composition is moulded in hot press compression moulding equipment, preferably at a temperature of 155°C±10°C and,
preferably, at a pressure of between 0.5 and 10 tonnes/cm², to cure the resin.

13. Use of a thermosetting phenolic resin of a resol type, or a composition including such a resin, in a method for producing a non-combustible article, capable of withstanding exposure to 1000°C for at least 1 hour.

14. The use claimed in claim 13, characterised in that the thermosetting phenolic resin is formed by condensing a phenol with formaldehyde, paraformaldehyde, or aliphatic or aromatic aldehyde.

15. The use as claimed in claim 14, characterised in that the thermosetting phenolic resin is formed by condensing phenol and formaldehyde or paraformaldehyde, in a ratio of 1 mol phenol to 1-3 mols formaldehyde or paraformaldehyde.

16. The use as claimed in any of claims 13-15, characterised in that the thermosetting phenolic resin is included in a composition together with reinforcing fibers and, optionally, an inorganic filler.

17. The use as claimed in claim 16, characterised in that the ratio of thermosetting phenolic resin:reinforcing fibers;inorganic filler is 33:33:33 (±5).

18. The use as claimed in claim 17, characterised in that the reinforcing fibers are glass, mineral or carbon fibers, the inorganic filler is aluminium hydride.

19. The use as claimed in any of claims 13-17, characterised in that the method comprises subjecting the thermosetting phenolic resin, or composition including the resin, to conditions of elevated temperature and pressure, preferably of 155°C ±10°C and 0.5-10 tonnes/cm² and, preferably, in hot press compression moulding equipment.

20. The use as claimed in claim 19, characterised in that the article formed is a shell for a fire containment sleeve.

Fig. 1

Fig. 2